# EUROPEAN PATENT APPLICATION

(11) **EP 1 953 021 A1**
(43) Date of publication of application: **06.08.2008**
(21) Application number: 08101070.4
(22) Date of filing: 29.01.2008
(51) Int. Cl.: B60J 11/00

(54) **Collapsible flood storage system**

(30) Priority: 01.02.2007 US 670368
(71) Applicant: Honeywell International Inc., Morristown, New Jersey 07962 (US)
(72) Inventor: Griffin, William J., Clearwater, FL 33764 (US)
(74) Representative: Buckley, Guy Julian

(57) **Abstract**

A collapsible watertight storage system (10) includes a watertight bag, a self-assembling collapsible hoop system, and equipment that keeps said watertight bag (11) from floating. The watertight storage system (10) may provide watertight storage for one or more objects loaded into the bag (11). The bag (11) may include a vacuum access hole to allow users to remove extra air from the bag (11) for compact storage or to reduce buoyancy, tie-down holes to secure the bag, and a watertight seal. The collapsible hoop system (24) may be expanded inside the bag (11) and may keep the watertight bag distended for loading. The collapsible watertight storage system (10) may be suitable, but not limited to, providing protection from water intrusion, for example, due to leaking roofs, floods, or otherwise elevated water conditions, for objects, such as equipment, appliances, and motor vehicles, that are typically otherwise protected from the environment but where water damage could cause irreparable harm.

## Description

### BACKGROUND OF THE INVENTION

The present invention generally relates to flood protection devices and, more particularly, to a collapsible watertight storage system and a method for protecting objects from water damage during a flood.

Each year millions of dollars worth of equipment, appliances, and motor vehicles, e.g., are unnecessarily damaged by water intrusion due to storm surge or leaking roofs because it may not be practical and/or possible to move all possibly affected assets prior to a storm to a safe location. This is particularly true since floods often occur unexpectedly and leave little or no opportunity to relocate objects, such as equipment, appliances, and motor vehicles.

In many cases, objects that need to be protected from a flood or other elevated water conditions are located within enclosed structures, such as a room in a house, a garage, or a shed. Such objects may be placed, time permitting, in flood protection containers well known in the art.

U.S. Patent 6,405,862 and U.S. Patent 6,059,105, for example, teach a motor vehicle flood protection apparatus that includes a plastic container having a bottom and a top part. When surrounded by floodwaters, the container will float with the vehicle carried therein. Such prior art containers need to be assembled prior to use and may provide splash protection but may not be watertight. Also, since such prior art containers float and may not be watertight, the containers may not perform well in locations where the vertical rise of the containers is limited by the height of a structure or by items stored above the enclosure. Such prior art container may also provide limited effectiveness for protection of high-density equipment that could not be easily floated.

U.S. Patent 4,315,535, for example, teaches a flood protection device that includes a flexible and collapsible container made out of a multi-layer material that includes layers of rubber and canvas, and has therefore, relatively high manufacturing cost. The container is closed with a drawstring seal, which may not be a watertight seal. In addition the container does not provide a means of anchoring the device in place.

U.S. Patent 5,954,200, for example, teaches a vehicle protective enclosure made from a flexible plastic material that includes a top and bottom cover sheet, which is hermetically joined or sealed on three congruent side edges. The protective enclosure may be sealed after insertion of a vehicle to minimize air leakage as floodwaters rise by rolling the open edge of the enclosure over a rigid strip member and then sealing the rolled-up edge using clamps to maintain the seal. Framework needs to be installed at the opening of the protective enclosure or additional individuals must be recruited to hold open the enclosure during insertion of the vehicle into the enclosure.

It is further known in the art, for example, U.S. Patent 6,405,862, U.S. Patent 6,059,105, and U.S. Patent 5,945,200, to anchor or otherwise tether floating protective enclosures or containers to stationary objects to prevent significant change in position with change in direction of flow of the flood waters and, therefore, to prevent the floating object from being damaged or damaging other objects due to the movement given to it by the flowing floodwaters. Typically, the anchors or other tethering devices are not used to secure the protective enclosures to the ground to prevent floating.

While the prior art flood protection containers may protect an object, such as a motor vehicle, from the floodwaters or other elevated water conditions, these containers typically consist of a plurality of parts that need to be assembled. The assembly may not be accomplished within the short time period available or may involve more than one person that may not be available. Furthermore, prior art flood protection containers typically float on the floodwaters when loaded and sealed. Even though, the containers may in some cases be secured to a stationary object, complete damage protection for the container and/or surrounding objects from the moving floodwaters may not be achieved.

As can be seen, there is a need for a flood protection device that includes only a few parts and that may be assembled, loaded, sealed, and secured by a single user within a short period of time. Furthermore, there is a need for a flood protection device that is lightweight, inexpensive, reusable, and easily stored.

### SUMMARY OF THE INVENTION

In one aspect of the present invention, a collapsible watertight storage system comprises a watertight bag, a self-assembling collapsible hoop system, and equipment that keeps the watertight bag from floating. The collapsible hoop system expands inside the watertight bag and keeps the watertight bag distended.

In another aspect of the present invention, a collapsible flood storage system comprises a watertight bag including a single piece flexible and foldable tube extending from a first end to a second end, a watertight seal integrated into the watertight bag on the inside of the tube at a distance from the second end, a vacuum access hole integrated into the watertight bag that enables removal of air trapped inside the watertight bag when sealed, a collapsible hoop system including a self-expanding collapsible spring, equipment that keeps the watertight bag from floating including a plurality of tether lines and anchors, and a plurality of weights. The tube has a permanently sealed edge positioned at the first end and an opening positioned at the second end opposite from the first end. The seal and the second end form an edge of the tube having a width equal to the distance and the edge includes a plurality of tie-down holes. The vacuum access hole enables removal of air trapped inside the watertight bag when sealed. The spring is expanded to full size inside the watertight bag and keeps the tube and the opening of the tube distended, and the spring collapses for storage. The tether lines attach to the tie-down holes of the tube, and attach the watertight bag to the anchors. At least one of the plurality of weights is positioned inside the watertight bag. At least one of the plurality of weights attaches to the tether lines opposite from the tie-down holes. At least one object is loaded into the watertight bag through the opening. The watertight seal closes the opening, and wherein the watertight bag provides watertight storage for the object.

In a further aspect of the present invention, a method for protecting objects from water damage in elevated water conditions comprises the steps of: unfolding a flexible watertight bag, distending the bag by expanding a self-assembling collapsible hoop system inside the bag, loading an object into the bag, sealing the bag with a watertight seal, and anchoring the bag in place.

These and other features, aspects and advantages of the present invention will become better understood with reference to the following drawings, description and claims.

### BRIEF DESCRIPTION OF THE DRAWINGS

Figure 1 is a top view of a collapsible watertight storage system according to an embodiment of the present invention;

Figure 2 is a perspective side view of a collapsible watertight storage system according to an embodiment of the present invention;

Figure 3 is a side view of a collapsible watertight storage system according to an embodiment of the present invention;

Figure 4 is a front view of a collapsible watertight storage system according to an embodiment of the present invention; and

Figure 5 is a flow chart schematically representing a method for protecting objects from water damage during elevated water conditions according to an embodiment of the present invention.

### DETAILED DESCRIPTION OF THE INVENTION

The following detailed description is of the best currently contemplated modes of carrying out the invention. The description is not to be taken in a limiting sense, but is made merely for the purpose of illustrating the general principles of the invention, since the scope of the invention is best defined by the appended claims.

Broadly, the present invention provides a watertight storage system and a method for protecting objects from water damage during a flood or other elevated water conditions. One embodiment of the present invention provides a collapsible watertight storage system that is suitable, but not limited to, providing protection from water intrusion, for example, due to leaking roofs, floods or otherwise elevated water conditions, for objects, such as equipment, appliances, and motor vehicles that are otherwise protected from the environment but where water damage could cause irreparable harm.

In contrast with the prior art, where the flood protection containers typically include a plurality of parts, the watertight storage system as in one embodiment of the present invention includes a large one-piece plastic or vinyl bag with an integrated user-closable watertight seal. By using a plastic or vinyl material as in one embodiment of the present invention, manufacturing costs may be lowered compared to prior art flood protection containers that are typically manufactured out of more expensive material, for example, layers of rubber and canvas.

In further contrast to the prior art, where the vehicle or other object enclosed in the flood protection container floats together with the container in the floodwaters, the watertight storage system as in one embodiment of the present invention may include equipment that keeps the watertight bag from floating. The equipment may include a tarp, weights, tether lines, and anchors to prevent the objects stored in the watertight bag from floating in the floodwaters or other elevated water conditions. In one embodiment, the watertight storage system of the present invention may include a vacuum access to allow removal of extra air from the inside of the sealed watertight bag for compacter storage and reduced buoyancy.

In a further contrast with the prior art, where framework needs to be assembled and installed at the opening of the flood protection container or additional individuals must be recruited to hold open the enclosure during loading, the collapsible watertight storage system as in one embodiment of the present invention may include lightweight collapsible hoops that may be positioned inside or at an opening of the watertight bag. Contrary to the prior art, the collapsible hoops may not need to be assembled and can be quickly positioned by a single person.

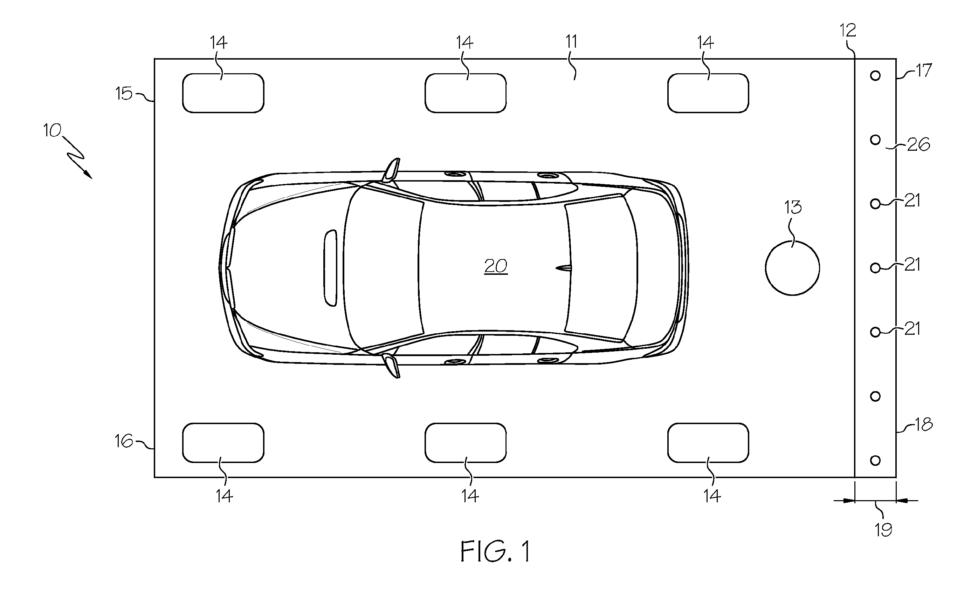

Referring now to Figure 1, a top view of a collapsible watertight storage system 10 is illustrated according to an embodiment of the present invention. The watertight storage system 10 may include a bag 11, a watertight seal 12, a vacuum access hole 13, and a plurality of weights 14.

The bag 11 may be manufactured as a single piece flexible tube made of water impermeable sheeting material, such as plastic or vinyl, and may extend from a first end 16 to a second end 18. The bag 11 may include a permanently sealed edge 15 at the first end 16 and an opening 17 at a second end 18 positioned opposite from the first end 16. The permanently sealed edge 15 may be watertight and airtight. It may further be possible to manufacture the bag 11 from two rectangular sheets of flexible and water impermeable sheeting material that are joint together by permanent water tight seals at three of the four sides of the rectangle (not shown). The size of the bag 11 may be chosen according to the size of an object 20 to be stored inside the bag 11. The object 20 may be, for example, a motor vehicle, an appliance, a piece of equipment or any other object that may be damaged by elevated water condition, for example, during a flood or due to a leaking roof. More than one object 20 may be stored in the watertight bag 11. The bag 11 may be folded for easy storage when not in use.

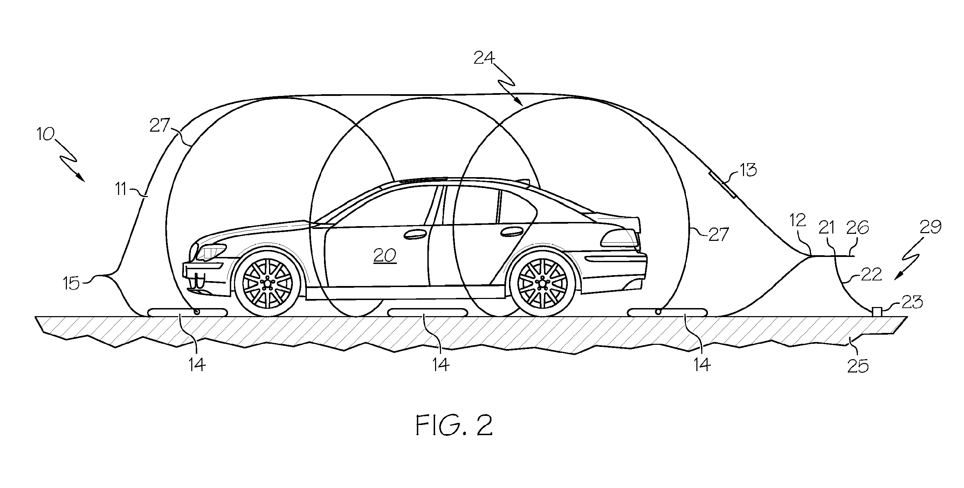

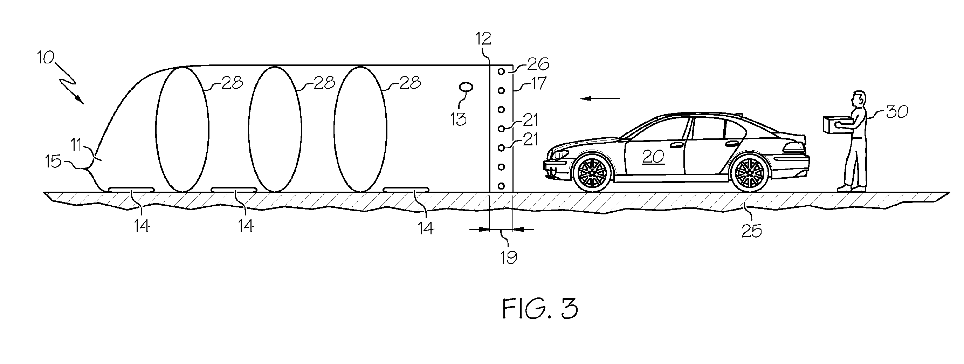

The watertight seal 12 may be integrated into the bag 11 on the inside at a distance 19 from the second end 18. The watertight seal 12 may be, for example a zip-lock® type seal. The watertight seal 12 may be closed and opened by a single user 30 (Figure 3). The seal 12 may resist entrance of water and air once closed. The seal 12 and the second end 18 of the bag 11 may form an edge 26 having a width equal to the distance 19. Distance 19 may be wide enough to allow tie-down holes 21 to be incorporated in edge 26 of the bag 11. The tie-down holes 21 may be used for securing a tether line 22 (shown in Figure 2).

The vacuum access hole 13 may be integrated in the bag 11 and may be positioned such that a user 30 (Figure 3) may have easy access to the vacuum access hole 13. A typical household or industrial vacuum cleaner hose may be inserted in the vacuum access hole 13 to remove air trapped inside the bag 11 after closing the watertight seal 12. Removing air from the sealed bag 11 may provide for compacter storage and may reduce the buoyancy of the loaded bag 11. More than one vacuum access hole 13 may be integrated in the bag 11.

A plurality of weights 14 may be placed inside the bag 11, for example, after the object 20 was loaded into the bag 11. The weights 14 may keep the loaded bag 11 from floating in the floodwaters or other elevated waters. The number of weights 14 used may depend on the weight and size of the loaded object 20. Weights 14 may include, for example, sand bags and iron weights. The weights 14 may have blunt edges. Additional weights 14 may be attached to the tie-down holes 21 using a tether line 22 (as shown in Figure 2). It may further be possible to place additional weights 14 from the outside on top of sections of the bag 11 that may not be needed for providing storage space to secure the bag 11 to the ground 25 (Figure 2). It may further be possible to place the weights 14 inside the object 20, for example, if the object 20 is a motorized vehicle.

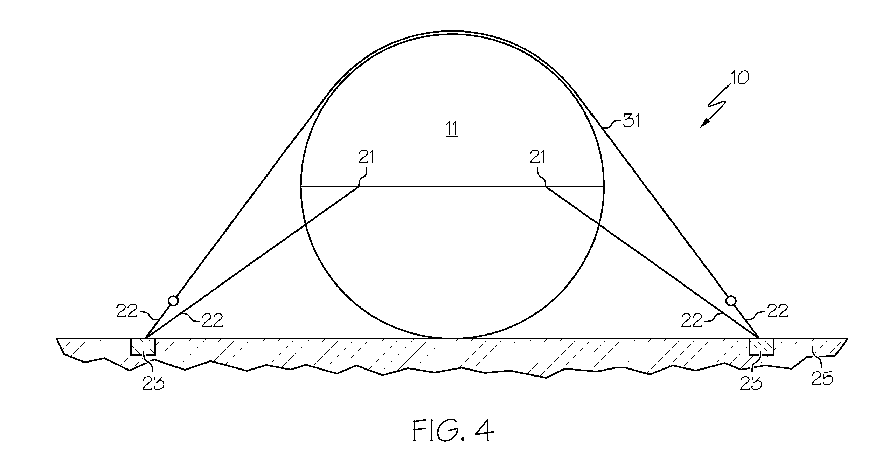

Referring now to Figure 2, a perspective side view of the collapsible watertight storage system 10 is illustrated according to an embodiment of the present invention. Illustrated in Figure 2 is a loaded, sealed, and anchored storage system 10. The watertight storage system 10 may further include equipment 29 that keeps said watertight bag 11 from floating, which may include a tarp 31 (Figure 4), weights 14, tether lines 22, and anchors 23. One end of the tether line 22 may be inserted into or attached to a selected tie-down hole 21 (shown in Figure 1) and the other end of the tether line 22 may be secured to the ground 25 using an anchor 23. The length of the tether line 22 may be adjustable. The anchor 23 may have the shape of a spike and may be pushed into the ground 25 if the ground 25 is soft. A plurality of anchors 23 may be preinstalled in the ground 25. The tether line 22 may further be attached to any available stationary object, such as poles or preinstalled hooks. In addition, it may be possible to use a rectangular tarp 31 (as shown in Figure 4) that may be positioned over the bag 11 and that may be anchored to the ground 25 using preinstalled in ground anchors 23 or weights 14. Illustrated in Figure 4 is a collapsible watertight storage system 10 that has been sealed with the watertight seal 12 and is anchored in place using tether lines 22 and the tarp 31.

The collapsible watertight storage system 10 as shown in Figure 2 may further include a collapsible hoop system 24 that may be self-assembling. The collapsible hoop system 24 may be a self-assembling collapsible spring 27 manufactured, for example, as a single piece out of a lightweight metal or plastic. The spring 27 may be collapsed to a smaller size for storage and may be expanded to full size inside the bag. The expanded spring 27 may keep the bag 11 distended and may provide easy access through the opening 17 of the bag 11. It may further be possible to expand the spring 27 to full size outside of the bag 11 and only then insert the spring 27 into the bag 11. After loading the object 20 into the bag 11, the spring 27 may be removed from the bag 11 or may stay inside the bag as desired by a user 30 (Figure 3).

Referring now to Figure 3, a side view of the collapsible watertight storage system 10 is illustrated according to an embodiment of the present invention. Illustrated in Figure 3 is an open storage system 10 during loading. As can be seen, the self-assembling collapsible hoop system 24 may include a plurality of self-assembling collapsible hoops 28 instead of the self-assembling spring 27 (shown in Figure 2). Each hoop 28 may be manufactured, for example, as a single piece out of a lightweight metal or plastic. Each hoop 28 may be collapsed for easy storage and may be expanded to full size inside or outside the bag 11. The hoops 28 may be positioned inside the bag 11 as desired by a user 30. One hoop 28 (not shown) may be positioned proximate to the second end 18 of the bag 11 to hold the opening 17 of the bag 11 open during the loading of the object 20. This hoop 28 may be removed from the bag prior to closing the seal 12. The bag 11 may include several pairs of short Velcro® straps (not shown) attached on the inside that may be used to hold the hoops 28 in place. The hoops 28 may stay inside the bag 11 after loading and during storage of the object 20 or the hoops 28 may be removed from the bag 11 before the seal 12 is closed. The watertight storage system 10 may be set-up, loaded, sealed, and secured in place by a single user 30 and within a relatively short time frame.

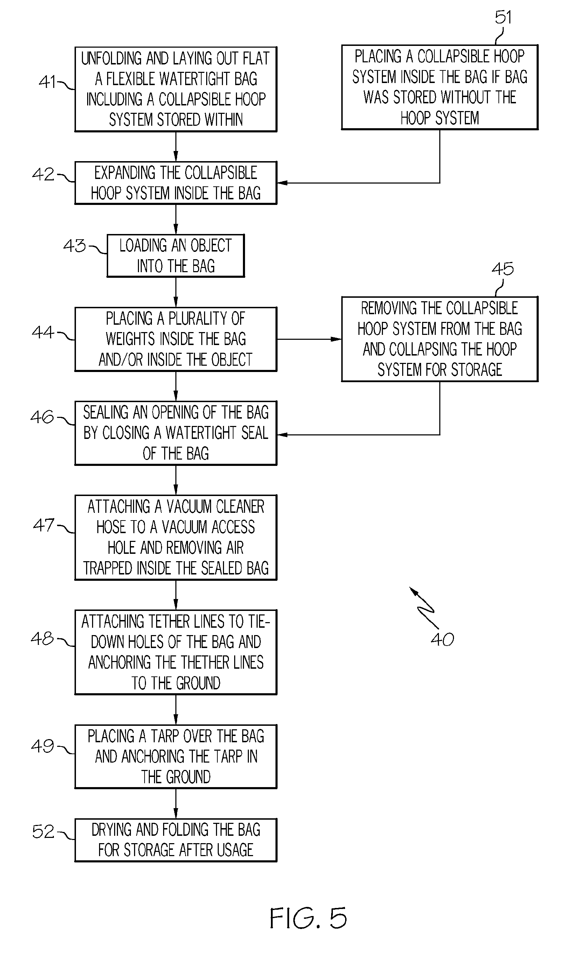

Referring now to Figure 5, a flow chart schematically representing a method 40 for protecting objects 20 from water damage during elevated water conditions, such as a flood, is illustrated according to an embodiment of the present invention. The method 40 may involve a step 41 where the flexible watertight bag 11 is unfolded and laid out flat on the ground 25. The collapsible hoop system 24 may have been stored in collapsed condition within the bag 11 and, therefore, may be positioned inside the bag 11 during step 41. If the collapsible hoop system 24 was not stored inside the bag 11, then the collapsible hoop system 24 may be placed inside the bag 11 in collapsed condition in a step 51. A step 42 may involve expanding the collapsible hoop system 24 to full size inside the bag 11. The expanded hoop system 24 may distend the watertight bag 11.

In a step 43, an object 20 may then be loaded into the bag 11 through the opening 17, which may be held open by the collapsible hoop system 24. Weights 14 may be placed inside the object 20 or inside the bag 11 in a step 44. A following step 45 may involve removing the collapsible hoop system 24 from the inside of the bag 11 and collapsing the hoop system 24 for storage. If the hoop system 24 will be stored within the bag 11 or if step 45 is not desired for other reasons, then step 45 may be omitted.

The watertight seal 12 may be closed in a step 46, thereby closing and sealing the opening 17 of the bag 11. In a following step 47, a vacuum cleaner hose may be attached to the vacuum access hole 13 and the air trapped inside the sealed bag 11 may be removed by operating the vacuum cleaner to reduce the buoyancy and size of the loaded bag 11.

A step 48 may involve anchoring the bag 11 in place by attaching tether lines 22 to selected or all tie-down holes 21 and by anchoring the tether lines 22 to the ground 25 using anchors 23 or weights 14. The weights 14 and anchors 23 may prevent the bag 11 loaded with the object 20 from floating in floodwaters or other elevated water conditions. In a step 49, a rectangular tarp 31 may be placed over the bag 11 and may be anchored to the ground 25. Steps 44, 47, 48, and 49 may not always be necessary and may be carried out as desired by the user 30 and as needed based on the expected flood conditions.

After usage during a flood or other elevated water condition, the bag 11 may be dried and folded for storage in a step 52. Steps 41 to 52 may be carried out by a single user 30 within a relatively short time frame.

It should be understood, of course, that the foregoing relates to exemplary embodiments of the invention and that modifications may be made without departing from the spirit and scope of the invention as set forth in the following claims.

## Claims

1. A collapsible watertight storage system (10), comprising:
a watertight bag (11);
a self-assembling collapsible hoop system (24), wherein said collapsible hoop system (24) expands inside said watertight bag (11) and keeps said watertight bag (11) distended; and
equipment (31, 14, 22, 23) that keeps said watertight bag (11) from floating.

2. The collapsible watertight storage system (10) of claim 1, wherein said watertight bag (11) includes a watertight seal (12) and a vacuum access hole (13), wherein said watertight seal (12) seals said watertight bag (11), and wherein said vacuum access hole (13) enables removal of air trapped inside said watertight bag (11) when sealed.

3. The collapsible watertight storage system (10) of any one or more claims 1-2, wherein at least one object (20) is loaded into said watertight bag (11), and wherein said watertight bag (11) provides watertight storage for said object (20).

4. The collapsible watertight storage system (10) of any one or more claims 1-3, wherein said watertight bag (11) includes a single piece flexible tube extending from a first end (16) to a second end (18), a permanently sealed edge (15) positioned at said first end (16), and an opening (17) positioned at said second (18) end opposite from said first end (16), wherein said watertight seal (12) is positioned inside said tube proximate to said second end (18), and wherein said watertight seal (12) closes said opening (17).

5. The collapsible watertight storage system (10) of any one or more claims 1-4, wherein said watertight bag (11) is manufactured from a flexible water impermeable plastic or vinyl sheeting material.

6. The collapsible watertight storage system (10) of any one or more claims 1-5, wherein said watertight bag (11) folds for storage, and wherein said collapsible hoop system (24) collapses for storage.

7. The collapsible watertight storage system (10) of any one or more claims 1-6, wherein said watertight bag (10) is set-up, loaded, sealed, and secured in place by a single user (30).

8. The collapsible watertight storage system (10) of any one or more claims 1-7, wherein said equipment that keeps said watertight bag from floating includes a tarp (31), weights (14), tether lines (22), and anchors (23), wherein said tether lines (22) attach said watertight bag (11) and said tarp (31) to said anchors (23).

9. The collapsible watertight storage system (10) of any one or more claims 1-8, wherein said self-assembling collapsible hoop system (24) includes a spring manufactured out of a lightweight material, wherein said spring collapses for storage, wherein said spring expands to full size and distends said watertight bag (11) and said opening (17) of said watertight bag (11).

10. The collapsible watertight storage system (10) of any one or more claims 1-9, wherein said self-assembling collapsible hoop system (24) includes at least one hoop (28), wherein said at least one hoop (28) is positioned inside said watertight bag (11) and proximate to said opening (17), and wherein said at least one hoop (28) holds said opening (17) open when expanded and collapses for storage.
